(19) **Europäisches Patentamt**

**European Patent Office**

**Office européen des brevets**

(11) **EP 0 997 725 B1**

(12) **EUROPEAN PATENT SPECIFICATION**

(45) Date of publication and mention
of the grant of the patent:
**29.12.2004 Bulletin 2004/53**

(51) Int Cl.$^7$: **G01N 3/02**

(21) Application number: **99203374.6**

(22) Date of filing: **14.10.1999**

(54) **Method for improving the archiving of dynamic parameters**

Verfahren zur Verbesserung der Archivierung dynamischer Parameter

Procédure d'amélioration de l'archivage de paramètres dynamiques

(84) Designated Contracting States:
**AT BE CH CY DE DK ES FI FR GB GR IE IT LI LU MC NL PT SE**

(30) Priority: **29.10.1998 EP 98203653**

(43) Date of publication of application:
**03.05.2000 Bulletin 2000/18**

(73) Proprietor: **PIRELLI PNEUMATICI Società per Azioni**
**20126 Milano (IT)**

(72) Inventors:
• **Brunacci, Antonio**
**Carlisle CA3 9LT (GB)**

• **Nahmias Nanni, Marco**
**20121 Milano (IT)**
• **Serra, Antonio**
**16138 Genova (IT)**

(74) Representative: **Marchi, Massimo et al**
**c/o Marchi & Partners s.r.l.,**
**Via Pirelli, 19**
**20124 Milano (IT)**

(56) References cited:
**EP-A- 0 457 412      EP-A- 0 466 060**
**EP-A- 0 867 708      US-A- 4 299 120**
**US-A- 4 567 774      US-A- 5 156 053**
**US-A- 5 253 513      US-A- 5 798 456**

**Description**

The present invention relates to a method for improving the archiving of a curve plotted from N measured experimental values of a dynamic parameter of a viscoelastic material where this parameter is a function of the deformation.

Among the properties of viscoelastic materials, those most closely related to their use are the dynamic properties, in other words the responses to the application of deformations.

In order to be able to select, at the moment of use, the material which best meets the final dynamic requirements of a desired product, it is necessary to know the dynamic properties of a large number of materials, and consequently to have made numerous experimental measurements beforehand for the purpose of characterizing them.

For example, in order to determine the dynamic properties of such materials, experimental measurements of the strain are generally made after cycles of deformation. These dynamic properties, however, depend on the temperature and frequency of their measurement. Moreover, for some materials, such as polymers filled with reinforcing materials, or asphalts, the situation is even more complex, since the properties also depend on the applied deformation. Consequently, the characterization of each material requires the acquisition of a large number of experimental values for a variety of temperature, frequency of use and applied deformation, and, subsequently, the archiving of the values thus obtained or of the graphs showing the curves passing through these experimental values. This storage requires long periods of time and paper or data-processing archives which are very large and easily damaged.

The inventors of the present invention, therefore, tackled the problem of simplifying the process of archiving the acquired experimental values of a dynamic parameter of a viscoelastic material where this parameter is a function of the deformation.

More precisely, in the case of the experimental curve, at a given temperature, of any dynamic parameter P as a function of any deformation q applied to a generic test specimen of a viscoelastic material, the inventors of the present invention unexpectedly discovered that this experimental curve could be reduced to a summation of exponentials of the type

$$P(q) = P_0 + \sum_{i=1}^{\infty} P_i e^{-\frac{q}{q_i}}$$

where

- P(q) is the value of the dynamic parameter as a function of the deformation q;

- $P_0$ is the value of the dynamic parameter at infinite deformation;
- q is the deformation in question;
- $P_i$ is the value of the characteristic dynamic parameter of the i-th deformation;
- $q_i$ is the characteristic deformation at which the i-th exponential intervenes.

The inventors also realized that 5 values, namely $P_0$, $P_1$, $q_1$, $P_2$, $q_2$, were sufficient to provide a good approximation of the said experimental curve.

For example, in the case of the experimental curve of the modulus of elasticity G' as a function, at a given temperature, of a torsion y applied to a cylindrical test specimen consisting of a mix, filled with lampblack, for a tyre tread, the inventors found that this experimental curve could be reduced, according to the present invention, to the relation

$$G'(\gamma) = G_0' + G_1' e^{\frac{\gamma}{\gamma_1}} + G_2' e^{\frac{\gamma}{\gamma_2}}$$

Finally, when they also investigated the experimental curves of the complex modulus G*, of the viscous modulus G" (where $|G^*| = \sqrt{(G')^2 + (G'')^2}$), and of the loss factor tanδ (where tanδ = G"/G') as a function of the torsion $\gamma$ applied to the test specimen, the inventors unexpectedly discovered that these could also be represented by the aforesaid summation of exponentials, and that five corresponding values, as shown above, were sufficient to provide a good approximation to each of the aforesaid experimental curves.

A first aspect of the present invention is therefore a method for improving the archiving of a curve plotted from at least N (N≥5) measured experimental values of a dynamic parameter P of a viscoelastic material where this parameter is a function of the deformation q at a given temperature, characterized in that it comprises the following stages:

a) the acquisition of N experimental measurements of the said dynamic parameter P of the said viscoelastic material where this parameter is a function of the deformation q at a predetermined temperature;
b) the determination, by successive approximations, of the values $P_0$, $P_1$, $q_1$, $P_2$, $q_2$, which, when inserted in the relation

$$P(q) = P_0 + P_1 e^{\frac{q}{q_1}} + P_2 e^{\frac{q}{q_2}} \qquad (A)$$

generate the curve which best approximates the experimental curve passing through all the points which represent the N values determined experimentally during the preceding stage a) where

- $P_0$ is the value of the dynamic parameter at infinite deformation;
- $P_1$ is the value of the characteristic dynamic parameter of the first deformation;
- $P_2$ is the value of the characteristic dynamic parameter of the second deformation,
- $q_1$ is the characteristic deformation at which the first exponential intervenes;
- $q_2$ is the characteristic deformation at which the second exponential intervenes;

c) the archiving of the values $P_0$, $P_1$, $q_1$, $P_2$, $q_2$ found in this way.

The method according to the present invention can be used to improve the archiving of N measured experimental values of a dynamic parameter P where this parameter is a function of the deformation q at a given temperature, thus reducing the number of values to be archived from 2*N (for each acquisition the value of the measured dynamic parameter and the corresponding applied deformation must be archived) to 5. Since in order to characterize unambiguously the dynamic properties of a viscoelastic material it is necessary to know the behaviour of at least two dynamic parameters as a function of the deformation (for example, the modulus of elasticity and the viscous modulus), and since many measurements (N≥5) are generally required for each dynamic parameter, it is evident that the method according to the invention makes it possible to reduce significantly the number of values to be archived.

In a first embodiment, the said dynamic parameter P is the modulus of elasticity P' of the said viscoelastic material.

In a second embodiment, the said dynamic parameter P is the viscous modulus P" of the said viscoelastic material.

In a third embodiment, the said dynamic parameter P is the complex modulus P* of the said viscoelastic material.

In a fourth embodiment, the said dynamic parameter P is the loss factor tan$\delta$ of the said viscoelastic material.

Additionally, after the acquisition of the N experimental measurements of the dynamic parameter of the viscoelastic material which are necessary to characterize the behaviour curve of the parameter under examination, stage b) comprises the stages of:

- calculating P(q), for at least 5 values of deformation q read on the said experimental curve which passes through all the points which represent the N values determined experimentally in stage a), by means of the curve defined by the said relation (A) in which an arbitrary value is assigned to the 5 values $P_0$, $P_1$, $q_1$, $P_2$, $q_2$,
- calculating the differences between the values of P (q) calculated in this way and the corresponding values belonging to the said experimental curve,
- summing the squares of the aforesaid differences,
- minimizing the sum of the squares of the differences to obtain the values $P_0$, $P_1$, $q_1$, $P_2$, $q_2$ which, when inserted in the aforesaid relation (A), generate the curve which best approximates the said experimental curve.

Preferably, the values of deformation q used to calculate P(q) by means of the relation (A) are selected from those used in stage a). More preferably, they are all those used in stage a).

At this point, the 5 values $P_0$, $P_1$, $q_1$, $P_2$, $q_2$ obtained in this way can be archived, for example in a paper archive or in the memory of a computer, so that they can be used subsequently when required.

### Example

60 parts by weight of type N234 carbon black, together with the conventional vulcanizing agents, vulcanization accelerators, activators, anti-ageing substances and plasticizers well known in the production of tread mixes, were added to 100 parts by weight of a mix for tyre treads consisting of a ternary mixture of 70 parts by weight of styrene butadiene rubber (SBR), 20 parts by weight of butadiene rubber (BR) and 10 parts by weight of natural rubber (NR). The mix produced in this way was then subjected to conventional sulphur-based vulcanization treatment at a temperature of 150°C for 30 minutes. Finally, a cylindrical test specimen having a diameter of $10 \pm 0.2$ mm and a height of $6 \pm 0.2$ mm was prepared from this mix.

A torsion test was conducted on this test specimen at a frequency of 1 Hz and at a temperature of $23 \pm 2$°C for different values of the angle $\alpha$ of applied torsion, by means of a machine known as the Asphalt Analyzer made by the Rheometric company, previously prepared for analysing the behaviour of the test specimen over a range of deformations from 0.05% to 40%, with logarithmic scanning of the applied deformations.

With this arrangement, since the dependence of the deformation $\gamma$ on the angle $\alpha$ of applied torsion is expressed by the following relation:

$$\gamma(\%) = \alpha \times \frac{R}{h} \times 100 \, .$$

where
R and h are the radius and height respectively of the cylindrical test specimen, the machine provided 29 pairs of measured values (deformation/value of parameter) for each of two parameters, namely the modulus of elasticity G' and the viscous modulus G", expressed in pascals (Pa).

Table 1 shows the 29 sets of three values found in this way.

Table 1

| γ% | G'(Pa) | G"(Pa) |
|---|---|---|
| 4.77E-02 | 1.32E+07 | 1.64E+06 |
| 5.97E-02 | 1.32E+07 | 1.64E+06 |
| 7.55E-02 | 1.31E+07 | 1.64E+06 |
| 9.50E-02 | 1.31E+07 | 1.65E+06 |
| 1.19E-01 | 1.30E+07 | 1.68E+06 |
| 1.50E-01 | 1.28E+07 | 1.70E+06 |
| 1.89E-01 | 1.26E+07 | 1.74E+06 |
| 2.39E-01 | 1.23E+07 | 1.82E+06 |
| 3.01E-01 | 1.18E+07 | 1.91E+06 |
| 3.81E-01 | 1.12E+07 | 2.00E+06 |
| 4.80E-01 | 1.05E+07 | 2.13E+06 |
| 6.06E-01 | 9.62E+06 | 2.25E+06 |
| 7.66E-01 | 8.82E+06 | 2.29E+06 |
| 9.67E-01 | 7.96E+06 | 2.30E+06 |
| 1.22E+00 | 7.08E+06 | 2.27E+06 |
| 1.54E+00 | 6.34E+06 | 2.17E+06 |
| 1.95E+00 | 5.63E+06 | 2.04E+06 |
| 2.46E+00 | 4.97E+06 | 1.89E+06 |
| 3.11E+00 | 4.40E+06 | 1.71E+06 |
| 3.92E+00 | 3.89E+06 | 1.54E+06 |
| 4.94E+00 | 3.42E+06 | 1.36E+06 |
| 6.23E+00 | 3.02E+06 | 1.20E+06 |
| 7.86E+00 | 2.67E+06 | 1.05E+06 |
| 9.91E+00 | 2.37E+06 | 9.15E+05 |
| 1.25E+01 | 2.11E+06 | 7.93E+05 |
| 1.57E+01 | 1.90E+06 | 6.92E+05 |
| 1.98E+01 | 1.71E+06 | 6.00E+05 |
| 2.50E+01 | 1.55E+06 | 5.24E+05 |
| 3.15E+01 | 1.41E+06 | 4.61E+05 |

By applying the method according to the invention as indicated above, the following values were obtained:

1. For G':

- minimum sum of squares of the errors: $2.36*10^{10}$;
- mean error: $1.54*10^5$, corresponding to the following values:

$$\Rightarrow G'_0 = 1.39*10^6;$$
$$\Rightarrow G'_1 = 8.84*10^6;$$
$$\Rightarrow \gamma'_1 = 1.03;$$
$$\Rightarrow G'_2 = 3.72*10^6;$$
$$\Rightarrow \gamma'_2 = 7.66.$$

2. For G":

- minimum sum of squares of the errors: $2.93*10^9$;

- mean error $5.41*10^4$, corresponding to the following values:

$$\Rightarrow G"_0 = 5.39*10^5;$$
$$\Rightarrow G"_1 = -1.36*10^6;$$
$$\Rightarrow \gamma"_1 = 0.467;$$
$$\Rightarrow G"_2 = 2.27*10^6;$$
$$\Rightarrow \gamma'_2 = 5.08.$$

The number of values in Table 1 is 87, and this is true of the majority of cases. By using the method according to the invention, the values to be archived can be reduced from 87 to 10 (in the case of two dynamic parameters) and from 58 to 5 (in the case of one dynamic parameter). In other words, they can be reduced to approximately 11.5% or 8.6% of the initial number.

Clearly, therefore, the method according to the invention effectively resolves the problem tackled by the inventors.

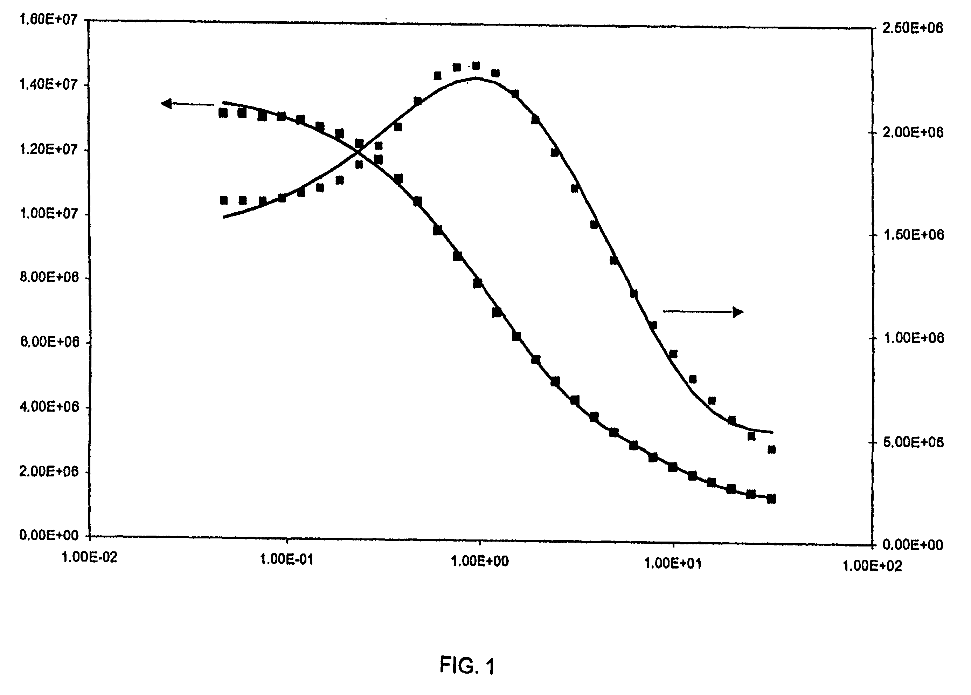

Fig. 1 shows the comparison between the experimental curves of G' and G" respectively (in which the individual actual measurements are represented by small squares) and the curves plotted by the method according to the invention (continuous lines).

It can be seen that:

- The mean error of the modulus of elasticity calculated by the method according to the invention is 2% of the measured mean value, while the maximum error of the calculated value is 2.5% of the corresponding measured value. In other words, the curve plotted by the method according to the invention shows a mean deviation of 2% from the curve obtained from the experimental values, and a maximum deviation of 2.5%.
- Similarly, the mean error of the calculated viscous modulus is 3.5% of the measured mean value, and the maximum error of the calculated value is 5% of the corresponding measured value. In this case, therefore, the curve plotted by the method according to the invention shows a mean deviation of 3.5% from the curve obtained from the experimental values, and a maximum deviation of 5%.

Clearly, the method according to the invention accurately reproduces the experimental values, and the minimum deviations which are found do not detract in any way from the reliability of the subsequent calculations carried out on the basis of the calculated values of P', P", P* and tanδ as a function of q in the design of products such as tyres for motor vehicles.

Claims

1. A method for improving the archiving of a curve plotted from at least N (N≥5) measured experimental values of a dynamic parameter P of a viscoelastic material where this parameter is a function of the deformation q at a given temperature, **characterized in that** it comprises the following stages:

a) the acquisition of N experimental measurements of the said dynamic parameter P of the said viscoelastic material where this parameter is a function of the deformation q at a predetermined temperature;

b) the determination, by successive approximations, of the values $P_0$, $P_1$, $q_1$, $P_2$, $q_2$, which, when inserted in the relation

$$P(q) = P_0 + P_1 e^{\frac{q}{q_1}} + P_2 e^{\frac{q}{q_2}} \qquad (A)$$

generate the curve which best approximates the experimental curve passing through all the points which represent the N values determined experimentally during the preceding stage a) where

- $P_0$ is the value of the dynamic parameter at infinite deformation;
- $P_1$ is the value of the characteristic dynamic parameter of the first deformation;
- $P_2$ is the value of the characteristic dynamic parameter of the second deformation;
- $q_1$ is the characteristic deformation at which the first exponential intervenes;
- $q_2$ is the characteristic deformation at which the second exponential intervenes;

c) the archiving of the values $P_0$, $P_1$, $q_1$, $P_2$, $q_2$ found in this way.

2. Method according to Claim 1, **characterized in that** the said dynamic parameter P is the modulus of elasticity P' of the said viscoelastic material.

3. Method according to Claim 1, **characterized in that** the said dynamic parameter P is the viscous modulus P'' of the said viscoelastic material.

4. Method according to Claim 1, **characterized in that** the said dynamic parameter P is the complex modulus P* of the said viscoelastic material.

5. Method according to Claim 1, **characterized in that** the said dynamic parameter P is the loss factor tanδ of the said viscoelastic material.

6. Method according to any of the preceding Claims 1 to 5, **characterized in that** stage b) comprises the stages of:

- calculating P(q), for at least 5 values of deformation q read on the said experimental curve which passes through all the points which represent the N values determined experimentally in stage a), by means of the curve defined by the said relation (A) in which an arbitrary value is assigned to the 5 values $P_0$, $P_1$, $q_1$, $P_2$, $q_2$,

- calculating the differences between the values of P(q) calculated in this way and the corresponding values belonging to the said experimental curve,

- summing the squares of the aforesaid differences,

- minimizing the sum of the squares of the differences to obtain the values $P_0$, $P_1$, $q_1$, $P_2$, $q_2$ which, when inserted in the aforesaid relation (A), generate the curve which best approximates the said experimental curve.

7. Method according to Claim 6, **characterized in that** the values of deformation q used to calculate P(q) by means of the relation (A) are selected from those used in stage a).

8. Method according to Claim 7, **characterized in that** the values of deformation q used to calculate P(q) by means of the relation (A) are all those used in stage a).

**Patentansprüche**

1. Verfahren zum Verbessern der Archivierung einer Kurve, die aus wenigstens N (N≥5) gemessenen Versuchswerten eines dynamischen Parameters P eines viskoelastischen Materials graphisch erstellt wird, wobei dieser Parameter eine Funktion der Verformung q bei einer gegebenen Temperatur ist, **dadurch gekennzeichnet, dass** das Verfahren die folgenden Schritte aufweist:

a) Erfassung von N-Versuchsmessungen des dynamischen Parameters P des viskoelastischen Materials, wobei dieser Parameter eine Funktion der Verformung q bei einer vorgegebenen Temperatur ist,

b) Bestimmen der Werte $P_0$, $P_1$, $q_1$, $P_2$, $q_2$ durch aufeinanderfolgende Approximierungen, wobei die Werte, wenn sie in die Beziehung

$$P(q) = P_0 + P_1 e^{\frac{q}{q_1}} + P_2 e^{\frac{q}{q_2}} \qquad (A)$$

eingesetzt werden, die Kurve erzeugen, die die experimentelle Kurve am besten approximiert, die durch alle Punkte hindurchgeht, die die während des vorhergehenden Schrittes a) experimentell bestimmt wurden, wobei

- $P_0$ der Wert für den dynamischen Parameter bei einer unbegrenzten Verformung,
- $P_1$ der Wert des charakteristischen dynamischen Parameters der ersten Verformung,
- $P_2$ der Wert des charakteristischen dynamischen Parameters der zweiten Verformung,
- $q_1$ die charakteristische Verformung bei der die erste Exponentialgröße eingreift und
- $q_2$ die charakteristische Verformung ist, bei der die zweite Exponentialgröße eingreift, und

c) die Werte $P_0$, $P_1$, $q_1$, $P_2$, $q_2$, die auf diese Weise gefunden werden, archiviert werden.

**2.** Verfahren nach Anspruch 1, **dadurch gekennzeichnet, dass** der dynamische Parameter P der Elastizitätsmodul P' des viskoelastischen Materials ist.

**3.** Verfahren nach Anspruch 1, **dadurch gekennzeichnet, dass** der dynamische Parameter P der Viskositätsmodul P'' des viskoelastischen Materials ist.

**4.** Verfahren nach Anspruch 1, **dadurch gekennzeichnet, dass** der dynamische Parameter P der Komplexmodul P* des viskoelastischen Materials ist.

**5.** Verfahren nach Anspruch 1, **dadurch gekennzeichnet, dass** der dynamische Parameter P der Verlustfaktor tanδ des viskoelastischen Materials ist.

**6.** Verfahren nach einem der vorhergehenden Ansprüche 1 bis 5, **dadurch gekennzeichnet, dass** der Schritt b) die Schritte aufweist:

- Berechnen von P(q) für wenigstens fünf Werte der Verformung q abgelesen an der experimentellen Kurve, die durch alle Punkte geht, welche die N-Werte darstellen, die experimentell im Schritt a) bestimmt wurden, mittels der Kurve, die durch die Beziehung (A) definiert ist, in der ein willkürlicher Wert den fünf Werten $P_0$, $P_1$, $q_1$, $P_2$, $q_2$ zugeteilt wird,
- Berechnen der Differenzen zwischen den Werten von P(q), die auf diese Weise berechnet wurden, und den entsprechenden Werten, die zu der experimentellen Kurve gehören,
- Summieren der Quadrate der vorstehenden Differenzen, und
- Minimieren der Summe der Quadrate der Differenzen, um die Werte $P_0$, $P_1$, $q_1$, $P_2$, $q_2$ zu

erhalten, die, wenn sie in die vorstehende Beziehung (A) eingesetzt werden, die Kurve erzeugen, die die experimentelle Kurve am besten approximiert.

**7.** Verfahren nach Anspruch 6, **dadurch gekennzeichnet, dass** die Werte der Verformung q, die zur Berechnung von P(q) mittels der Beziehung (A) verwendet werden, aus den beim Schritt a) verwendeten ausgewählt werden.

**8.** Verfahren nach Anspruch 7, **dadurch gekennzeichnet, dass** die Werte der Verformung q, die zur Berechnung von P(q) mittels der Beziehung (A) verwendet werden, alle Werte sind, die beim Schritt a) verwendet werden.

## Revendications

**1.** Procédé d'amélioration de l'archivage d'une courbe tracée à partir d'au moins N (N ≥ 5) valeurs expérimentales mesurées d'un paramètre dynamique P d'un matériau viscoélastique, ce paramètre étant une fonction de la déformation q à une température donnée, **caractérisé en ce qu'**il comprend les étapes suivantes :

a) l'acquisition de N mesures expérimentales dudit paramètre dynamique P dudit matériau viscoélastique, ce paramètre étant une fonction de la déformation q à une température donnée ;
b) la détermination, par approximations successives, des valeurs $P_0$, $P_1$, $q_1$, $P_2$, $q_2$ qui, lorsqu'elles sont insérées dans l'équation :

$$P(q) = P_0 + P_1 e^{\frac{q}{q_1}} + P_2 e^{\frac{q}{q_2}} \qquad (A)$$

produisent la courbe qui s'approche le plus de la courbe expérimentale passant par tous les points qui représentent les N valeurs déterminées expérimentalement à la précédente étape a), où :

- $P_0$ est la valeur du paramètre dynamique à la déformation infinie ;
- P, est la valeur du paramètre dynamique caractéristique de la première déformation ;
- $P_2$ est la valeur du paramètre dynamique caractéristique de la deuxième déformation ;
- $q_1$ est la déformation caractéristique à laquelle intervient la première exponentielle ;
- $q_2$ est la déformation caractéristique à laquelle intervient la deuxième exponentielle ;

c) l'archivage des valeurs $P_0$, $P_1$, $q_1$, $P_2$, $q_2$ ainsi trouvées.

2. Procédé selon la revendication 1, **caractérisé en ce que** ledit paramètre dynamique P est le module d'élasticité P' dudit matériau viscoélastique.

3. Procédé selon la revendication 1, **caractérisé en ce que** ledit paramètre dynamique P est le module visqueux P" dudit matériau viscoélastique.

4. Procédé selon la revendication 1, **caractérisé en ce que** ledit paramètre dynamique P est le module complexe P* dudit matériau viscoélastique.

5. Procédé selon la revendication 1, **caractérisé en ce que** ledit paramètre dynamique P est le coefficient de pertes $\tan\delta$ dudit matériau viscoélastique.

6. Procédé selon l'une quelconque des revendications 1 à 5, **caractérisé en ce que** l'étape b) comprend les étapes consistant à :

   - calculer P(q), pour au moins 5 valeurs de déformation q lues sur ladite courbe expérimentale qui passe par tous les points qui représentent les N valeurs déterminées expérimentalement à l'étape a), au moyen de la courbe définie par ladite équation (A) dans laquelle une valeur arbitraire est attribuée aux 5 valeurs $P_0$, $P_1$, $q_1$, $P_2$, $q_2$,
   - calculer les différences entre les valeurs de P(q) ainsi calculées et les valeurs correspondantes appartenant à ladite courbe expérimentale,
   - additionner les carrés desdites différences,
   - minimiser la somme des carrés des différences pour obtenir les valeurs $P_0$, $P_1$, $q_1$, $P_2$, $q_2$ qui, lorsqu'elles sont insérées dans ladite équation (A), produisent la courbe qui s'approche le plus de ladite courbe expérimentale.

7. Procédé selon la revendication 6, **caractérisé en ce que** les valeurs de la déformation q utilisées pour calculer P(q) au moyen de l'équation (A) sont choisies parmi celles utilisées à l'étape a).

8. Procédé selon la revendication 7, **caractérisé en ce que** les valeurs de la déformation q utilisées pour calculer P(q) au moyen de l'équation (A) sont toutes celles utilisées à l'étape a).

FIG. 1

EP 0 997 725 B1